# EUROPÄISCHE PATENTSCHRIFT

(11) **EP 1 760 250 B1**
(45) Veröffentlichungstag und Bekanntmachung des Hinweises auf die Patenterteilung: **10.11.2010**
(21) Anmeldenummer: 06017601.3
(22) Anmeldetag: 24.08.2006
(51) Int. Cl.: E06B 9/78, F16D 1/00

(54) **Betätigungsanordnung für einen Rolladen**
Actuation assembly for roller shutters
Ensemble d'actionnement pour un volet roulant

(30) Priorität: 30.08.2005 DE 102005041139
(43) Veröffentlichungstag der Anmeldung: 07.03.2007
(73) Patentinhaber: WO & WO Sonnenlichtdesign GmbH & Co KG, 8054 Graz (AT); Roma Rolladensysteme GmbH, 89331 Burgau (DE)
(72) Erfinder: Pfaudler, Volker, 89349 Burtenbach (DE); Pauritsch, Martin, 8051 Graz (AT)
(74) Vertreter: Munk, Ludwig

(56) Entgegenhaltungen:
- DE-A- 2 359 471
- DE-A1- 3 739 727
- DE-A1-102004 029 382
- JP-A- 2000 179 257

## Beschreibung

Die Erfindung betrifft eine Betätigungsanordnung gemäß dem Oberbegriff des Anspruchs 1 sowie einen Rollladen gemäß dem Oberbegriff des Anspruchs 9.

Bei gängigen Rollläden mit einem Rollladenkasten, in dem eine Wickelwelle gelagert ist, auf der der Rollladenbehang aufgenommen ist, sind häufig als Betätigungsanordnung mit der Wickelwelle verbundene, aus dem Rollladenkasten herausgeführte Kurbelstangen vorgesehen, über die die Wickelwelle gedreht und damit der Rollladenbehang auf- und abgewickelt werden kann. Die Kurbelstange weist dabei an ihrem Außenende herkömmlicherweise ein Kardangelenk auf, über das eine bis auf eine ergonomische Arbeitshöhe heruntergeführte Handkurbel anschließt. Dokument DE 2 359 471 A zeigt eine solche Betätigungsanordnung, mit sämtlichen Merkmalen des Oberbegriffs des Anspruchs 1.

Aufgabe der vorliegenden Erfindung ist es, einen Rollladen und eine Betätigungsanordnung dafür bereit zu stellen, die eine gute Isolierung des Rollladenkasteninneren gegenüber dem Gebäudeinneren ermöglichen.

Diese Aufgabe wird mit den Merkmalen des Anspruchs 1 gelöst.

Erfindungsgemäß weist die Betätigungsanordnung dazu eine Drehmomentübertragungsvorrichtung mit zumindest einem Wärmekonduktionssperrglied auf, um die Seite höherer Temperatur und der Seite niederer Temperatur thermisch zu Trennen. Der erfindungsgemäße Rollladen ist mit dieser Betätigungsanordnung ausgestattet.

Damit gelingt es, eine bei herkömmlichen Kurbelstangen bestehende Kältebrücke zwischen der kalten Gebäudeumgebung bzw. dem damit thermisch in Verbindung stehenden Rollladenkasteninneren und dem warmen Gebäudeinnenraum auszuschalten, so dass Probleme, wie Schimmelbildung und Korrosion, vermieden werden können. Denn herkömmkliche Kurbelstangen bestehen üblicherweise aus Metall und sind daher gute Wärmeleiter, so dass sie eine Kältebrücke zwischen dem zum Gebäudeäußeren hin nur schlecht abgedichteten Rollladenkasteninneren und dem Gebäuderaum bilden.

Bei früheren Bauten war die Wärmedämmung der Gebäude insgesamt auf einem relativ niederen Niveau, so dass die durch die Kurbelstange gebildete Kältebrücke nicht weiter aufgefallen ist. Im Zuge zunehmender Energiesparanstrengungen und verschärfter gesetzlicher Vorschriften wurden die Wärmedämmungen von Neubauten jedoch ständig verbessert. Dabei hat sich herausgestellt, dass es durch die von der Kurbelstange gebildete Kältebrücke nicht nur zu einem Energieverlust kommt, sondern dass auch Schäden an Gebäuden und Rollläden hervorgerufen werden, wie beispielsweise eine durch an der Kältebrücke auskondensierendes Wasser hervorgerufene Korrosion und Schimmelbildung.

Das Wärmekonduktionssperrglied kann dabei als aus einem schlecht wärmeleitenden Material wie beispielsweise Kunststoff oder Keramik gefertigte Welle realisiert werden. Die Welle kann dabei schon die gesamte Drehmomentübertragungsvorrichtung bilden, wobei dann auf eine zur Drehmomentenübertragung ausreichende Dimensionierung und evtl. auf eine entsprechende Oberflächenbehandlung an den Anschlußstellen zur Wickelwelle bzw. zum gebäudeinnenseitigen Antriebsstrang zu achten ist. Es wäre jedoch auch denkbar, eine oder mehrere Metallseelen mit dem schlecht wärmeleitenden Material zu ummanteln, insbesondere mehrere miteinander fluchtende, axial beabstandete Metallseelen, so dass das Wärmekonduktionssperrglied durch den Kunststoffmantel an den Enden der Drehmomentübertragungsvorrichtung bzw. an den Kunststoffbrücken zwischen den einzelnen Metallseelen gebildet wird. Alternativ dazu könnte lediglich die zwischen den Anschlußkupplungsteilen an die Wickelwelle und/oder den Antriebsstang vorgesehene Welle aus Kunststoff ausgeformt werden, wohingegen die Anschlußkupplungen aus im Vergleich dazu abriebfestem Metall geformt sein können.

Momentan bevorzugt ist als Wärmekonduktionssperrglied jedoch eine zwischen zwei Metallstangen geschaltete Büchsenanordnung aus dem schlecht wärmeleitenden Material vorgesehen, so dass es ausgehend von bekannten Kurbelstangen keine konstruktiv aufwändigen Änderungen bedarf, sondern die Kurbelstange in zwei durch die Büchsenanordnung voneinander getrennte Kurbelstangenabschnitte getrennt wird.

Das Wärmekonduktionssperrglied kann dabei zumindest eine Kunststoffbüchsenanordnung aufweisen, in der die beiden Kurbelstangenabschnitte untereinander berührungsfrei jeweils drehschlüssig aufgenommen sind. Die Kältebrücke, die durch eine einteilige Kurbelstange gebildet würde, wird dadurch wirkungsvoll unterbrochen. Wenn die Kurbelstange dabei im Bereich der thermischen Sperre durch die Gehäusewand des Kastens bzw. deren Isolierung oder ein anderes eine thermische Trennung bildendes Bauteil zwischen Rollladenkasten und Gebäuderaum wie beispielsweise Fensterrahmen oder -laibung hindurchgeführt ist, kann über die Betätigungsanordnung keine Wärmekonduktion zwischen Rollladenkasteninnerem und Gebäuderaum mehr stattfinden. Besonders vorteilhaft ist die Durchführung der Kurbelstange dabei thermisch abgedichtet, so dass auch keine über Zugluft erfolgende Konvektion stattfinden kann.

Die Kunststoffbüchsenanordnung kann dabei mehrteilig sein, vorteilhaft sind zwei separate, im Querschnitt U-förmige Kunststoffbüchsen, deren miteinander verbundene Böden eine Trennwand zwischen der nach innen gerichteten Aufnahme der einen Kunststoffbüchse für den inneren Kurbelstangenabschnitt und der nach außen gerichteten Aufnahme der anderen Kunststoffbüchse für den äußeren Kurbelstangenabschnitt bilden. Mit der Trennwand zwischen den Aufnahmen für die beiden separaten Kurbelstangenabschnitte kann ein Kontakt besonders zuverlässig vermieden werden. Die Übertragung des Drehmoments von dem äußeren Kurbelstangenabschnitt auf die Kunststoffbüchsenanordnung und von dort auf den inneren Kurbelstangenabschnitt kann dabei beispielsweise formschlüssig erfolgen, insbesondere wenn die Kurbelstangenabschnitte und die zugeordneten Aufnahmen in der Kunststoffbüchsenanordnung einen Mehrkant- beispielsweise Vierkantquerschnitt aufweisen.

Vorteilhaft weist die thermische Sperre dabei außerdem eine Außenringanordnung auf, in der die Kunststoffbüchsenanordnung drehbar aufgenommen ist. Mit der Außenringanordnung kann die thermische Sperre in eine Durchgangsöffnung in der Gehäusewand bzw. der Isolierung des Rollladenkastens eingeschoben werden und die Durchgangsöffnung passgenau verschließen. Somit ergibt sich eine gute Abdichtung gegen Konvektion zwischen Rollladenkasteninnerem und Gebäudeinnerem, bei gleichzeitiger Verhinderung von Konduktion durch die Kurbelstangenabschnitte. Optional ist die Außenringanordnung in die Durchgangsöffnung eingepresst. Auch eine Verklebung, Verschraubung oder Einschäumung wäre denkbar.

Der mögliche Luftzug zwischen Kasteninnerem und Wohnraum ist somit auf den zwischen der Kunststoffbüchsenanordnung und der Außenschalenanordnung verbleibenden Spalt beschränkt, der nicht durch eine statische Isolierung ausgefüllt werden kann, da die beiden Teile gegeneinander bewegbar sein müssen. Dadurch, dass zwischen der Außenringanordnung und der Kunststoffbüchsenanordnung lediglich ein schmaler Luftspalt vorgesehen ist, kann der Luftzug jedoch gering gehalten werden, ohne einen durch Reibung erzeugten Verschleiß in Kauf nehmen zu müssen. Optional könnte auch eine berührende Lagerung der Kunststoffbüchsenanordnung in der Außenringanordnung vorgesehen sein. Weiterhin vorteilhaft sind zusätzliche Dichtungsmaßnahmen, wie beispielsweise ein oder mehrere Wellendichtringe, O-Ringe, Labyrinthdichtungen oder dergleichen.

Auch die Außenringanordnung kann dabei im Sinne einer einfachen Montage mehrteilig sein. Beispielsweise können zwei separate, stumpf aneinander anliegende Außenringe vorgesehen sein oder zwei separate, in Form von Lagerhälften aufeinander liegende Außenschalen. Die Einzelteile der mehrteiligen Außenringanordnung können ebenso wie die Einzelteile einer mehrteiligen Kunststoffbüchsenanordnung miteinander verstiftet bzw. verschraubt sein.

Weitere vorteilhafte Weiterbildungen der Erfindung sind Gegenstand der weiteren Unteransprüche.

So könnte beispielsweise auch bei einer einteiligen Kunststoffwelle eine aus zwei Lagerschalen gebildete Außenringanordnung vorgesehen sein, mit der die Kunststoffwelle im Bereich der Durchtrittsspalt der Welle durch die Wand des Rollladenkastens oder eines Fensterrahmens als Abdichtung gegen Konvektion umschlossen ist. Sämtliche Weiterbildungen, wie beispielsweise Dichtringe, Schultern oder Labyrinthdichtungen könnten auch in diesem Fall Anwendung finden.

Ebenso wäre es denkbar ausgehend von der Wickelwelle und/oder dem gebäudeinnenseitigen Antriebsstrang beliebig lange Metallstummel oder -muttern vorzusehen, solange dazwischen das Wärmekonduktionssperrglied, also beispielsweise eine diese Metallteile miteinander verbindende Kunststoffwelle mit entsprechend der Metallteile gestalteten Wellenenden. Auch in diesem Fall kann das Wärmekonvektionssperrglied, also beispielsweise die Außenringanordnung vorgesehen sein.

Im Weiteren werden unter Bezugnahme auf die Figuren bevorzugte Ausführungsformen der Erfindung erläutert. Es zeigen:
- Figur 1: eine schematische Schnittansicht durch einen Aufsatzrollladen gemäß einer Ausführungsform der Erfindung;
- Figur 2: eine Schnittansicht durch einen Vorbaurollladen gemäß einer weiteren Ausführungsform der Erfindung;
- Figur 3: eine Detailschnittansicht der thermischen Sperre der bei den Rollläden der Figuren 1 und 2 eingebauten Betätigungsanordnung;
- Figur 4: eine der Einzelheit IV in Figur 3 entsprechende Darstellung gemäß einer Weiterbildung der Erfindung;
- Figur 5: eine der Figur 3 entsprechende Abbildung einer Betätigungsanordnung gemäß einer weiteren Ausführungsform der Erfindung; und
- Figur 6: eine Betätigungsanordnung gemäß einer weiteren Ausführungsform der Erfindung; und
- Figur 7: eine Schnittansicht durch einen Vorbaurollladen gemäß einer weiteren Ausführungsform der Erfindung.

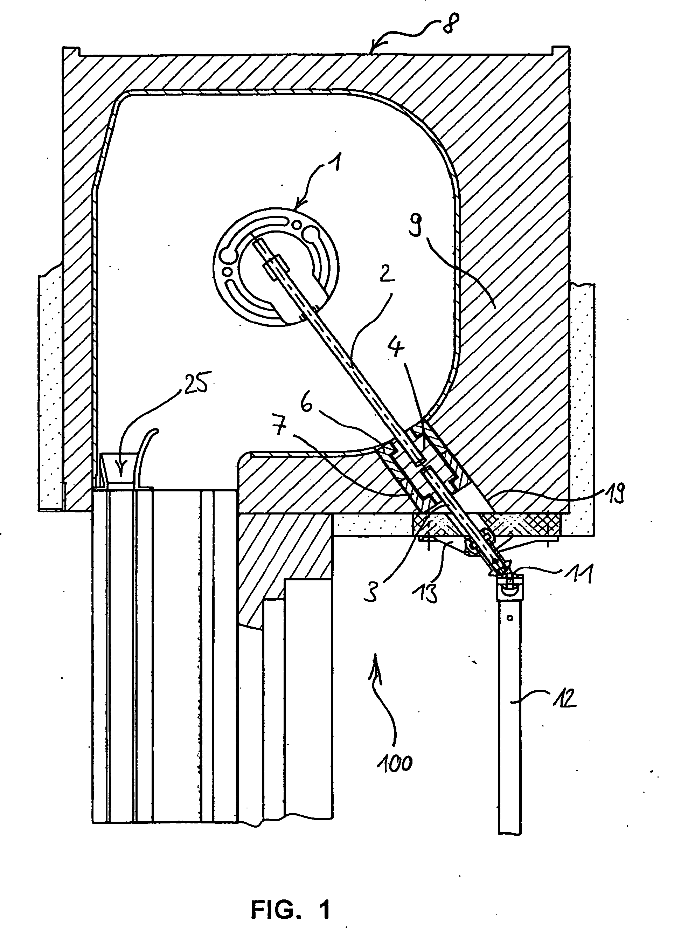

Figur 1 zeigt einen Aufsatzrollladen 100 mit einer in einem Rollladenkasten 8 drehbar angeordneten Wickelwelle 1. Die Wickelwelle 1 ist dabei über eine geeignete Getriebeeinheit mit einer zusammen mit einer Kunststoffbüchsenanordnung 4 als Drehmomentübertragungseinrichtung fungierenden Kurbelstange 2,3 verbunden, die einen inneren Kurbelstangenabschnitt 2 und einen äußeren Kurbelstangenabschnitt 3 aufweist, die über die Kunststoffbüchsenanordung 4 drehmomentübertragend, aber nicht wärmeleitend miteinander in Verbindung stehen. Die Kunststoffbüchsenanordung 4 ist dabei in eienr Außenringanordnung 6, 7 aufgenommen, über die sie in einer Durchgangsöffnung 19 in einer Wand 9 des Rollladenkasten 8 angeordnet ist und führt vom Rollladenkasteninneren zum hinter der von dem Rollladen abzuschattendem Gebäudeöffnung befindlichen Wohnraum hin, wobei die Wand 9 gleichzeitig als Isolierung des Rollladenkastens dient und beispielsweise aus geschäumtem Styropor oder Polyurethan bestehen kann.

Wohnraumseitig ist die Durchgangsöffnung 19 von einem am Rollladenkasten anschraubbaren Deckel 13 verschlossen, durch den der äußere Kurbelstangenabschnitt 3 hindurchgeführt ist. Der äußere Kurbelstangenabschnitt 3 weist dabei an seinem wohnraumseitigen Ende ein Kardangelenk 11 auf, über das eine handbetätigbare Kurbel 12 drehmomentübertragend mit der Kurbelstange 2, 3 verbunden ist. Dabei gelingt durch die Unterbrechung der Wärmeleitung in der Kurbelstange 2,3 durch die thermische Sperre 10 einerseits und die Abdichtung der Durchgangsöffnung 19 durch die Kunststoffbüchsenanordung 4 und die Unterbrechung der Wärmekonvektion in der Durchgangsöffnung 19 durch die Außenringanordnung 6, 7 und den Deckel 13 in der Isolierwand 9 des Rollladenkastens 8 eine gute thermische Trennung des Wohnraums von dem Rollladenkasteninneren, das über einen Durchtrittsspalt für den Rollladenbehang im Bereich der mit 25 bezeichneten Führungsschiene mit der Außenumgebung in Wärmeaustausch steht.

Einerseits wird eine Wärmekonduktion entlang der Kurbelstange 2,3 dadurch unterbrochen, dass sich die beiden metallischen Kurbelstangenabschnitte 2,3 nicht berühren. Andererseits wird eine Wärmekonvektion durch Zugluft dadurch unterbrochen, dass die Durchgangsöffnung 19 mit der Außenringanordnung 6, 7 und dem Deckel 13 abgedichtet ist, so dass die insgesamt mit der Isolierung 9 vorgenommene thermische Trennung des Rollladenkasteninneren von dem Wohnraum auch im Bereich des Kurbelstangendurchtritts erhalten bleibt. Folgeschäden wie ständiges Beschlagen, das Heruntertropfen von Kondenswasser, Korrosion oder Schimmelbildung wird dadurch vermieden.

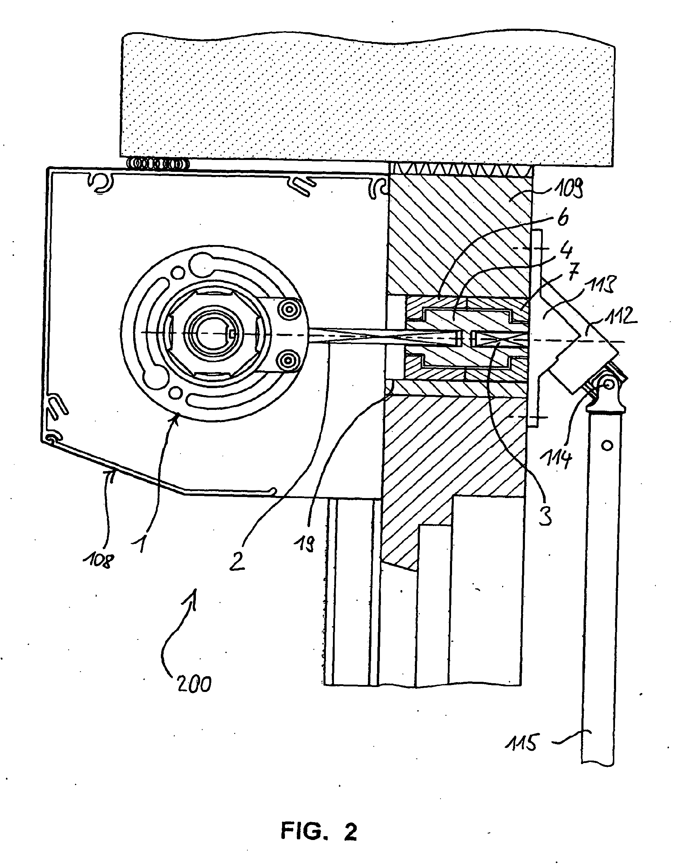

Bevor die durch das Wärmekonduktionssperrglied 4 und das Wärmekonvektionssperrglied 6, 7 gebildete thermische Sperre 10 im Einzelnen erläutert werden wird, soll noch eine Ausführungsform des erfindungsgemäßen Rollladens als Vorbaurollladen 200 kurz beschrieben werden, die in Figur 2 dargestellt ist. Dabei werden funktional gleiche Bauteile mit den gleichen Bezugszeichen wie in Figur 1 bezeichnet.

Wiederum befindet sich die über die Kurbelstange 2, 3 angetriebene Wickelwelle 1 in einem Rollladenkasten, der hier jedoch als Vorbau-Rollladenkasten 108 ausgeführt ist, welcher gebäudeaußenseitig auf einem Fensterrahmen 109 angebracht ist. In dem Fensterrahmen 109 ist eine Durchtrittsöffnung 19 für die Kurbelstange 2, 3 vorgesehen. In die Durchtrittsöffnung 19 ist das von dem Wärmekonvektionssperrglied 6, 7 umschlossene Wärmekonduktionssperrglied 4 eingeschoben, so dass die gewünschte thermische Trennung des inneren Kurbelstangenabschnitts 2 und des äußeren Kurbelstangenabschnitts 3 erfolgt. Gebäudeinnenseitig ist die Durchgangsöffnung 19 in dem Fensterrahmen mit einem Deckelelement 113 verschlossen, das im vorliegenden Fall als Gelenkträger ausgebildet ist, wobei ein an das äußere Kurbelstangenelement 3 anschließendes Gelenk vorgesehen ist, über das ein von einer Hülse 112 umschlossenes Antriebswellenstück unter Winkel drehmomentübertragend an die Kurbelstange 2,3 angeschlossen ist und sich zu einem weiteren Kardangelenk 114 hin erstreckt, über das wiederum eine Handkurbel 115 angeschlossen ist.

Wie aus den beiden vorangegangenen Figuren deutlich wird, kann die Erfindung bei Rollladen jeglicher Bauart zur Vermeidung einer Kältebrücke an dem Durchtritt der Kurbelstange vom Gebäudeinneren zum Rollladenkasteninneren hin angewendet werden. Das Wärmekonduktionssperrgleid und das Wäremkonvektionssperrglied bilden dabei insgesamt eine Kältesperre die abdichtend in der Durchtrittsöffnung für die Kurbelstange anzuordnen ist und sich daher je nach Bauart des Rollladenkastens in der Isolierung des Rollladenkastens, der Rollladenkastenwand, einem Fensterrahmen oder einer Fensterlaibung befinden kann.

An dieser Stelle sei auch darauf hingewiesen, dass die Erfindung nicht auf Rollläden beschränkt ist, sondern auch bei Außenjalousien angewandt werden kann.

Im einzelnen könnte die Außenjalousie mit einem Wickelwellenkasten ausgestattet sein, in dem eine Wickelwelle gelagert ist, auf der Zugorgane zum Auf- und Abverfahren eines Behangs aufgenommen sind, der sich auf einer Seite einer Wand mit niederer Temperatur befindet, durch die eine Betätigungsanordnung zum Anschluß eines Antriebsstrangs auf einer Seite mit höherer Temperatur geführt ist und sich dadurch auszeichnen, dass zur Drehbetätigung der Wickelwelle eine Betätigungsanordnung gemäß einer Ausführungsform der Erfindung vorgesehen ist. Die Außenjalousie kann dann durch die Merkmale der Ausführungsformen des erfindungsgemäßen Rollladens weitergebildet werden.

Ebenso gut ist sie bei anderen aufwickelbaren Behängen, wie beispielsweise Rolltoren, Markisen oder über Zugorgane hochfahrbaren Behängen, insbesondere Außenjalousien anwendbar, wenn sich das Problem einer Kältebrücke an der Durchtrittsöffnung der Wickelwellenantriebs-Kurbelstange zwischen Kasteninnerem und Gebäudeinnerem stellt.

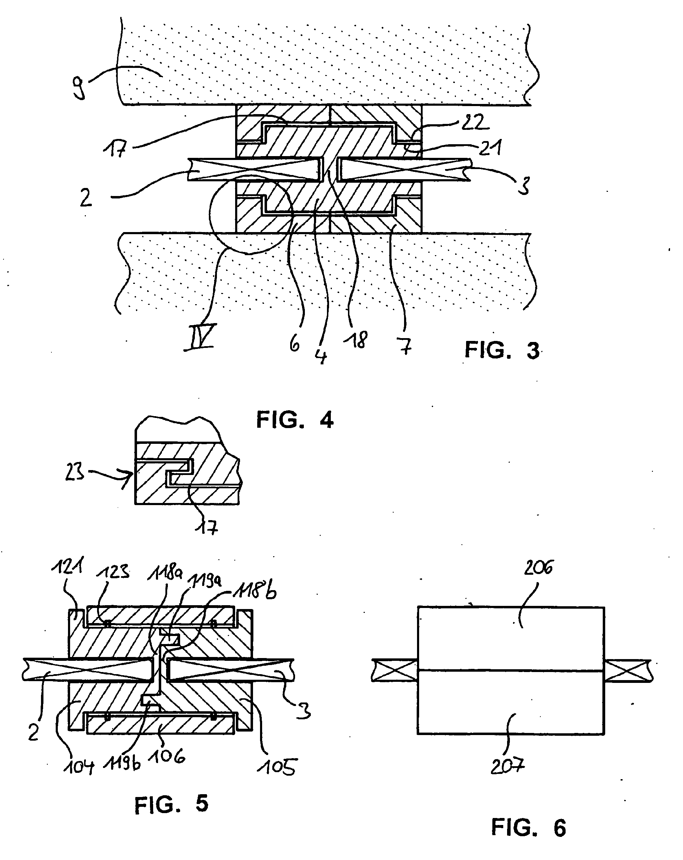

Im Folgenden werden einzelne Ausführungsformen der erfindungsgemäßen Kältesperre mit Bezugnahme auf die Figuren 3 bis 6 beschrieben.

Figur 3 zeigt die in den Figuren 1 und 2 eingebaute Kältesperre im Einzelnen. Die Kältesperre 10 weist dabei eine Kunststoffbüchse 4 auf, in der an beiden Stirnseiten eine Aufnahmeöffnung für den jeweiligen Kurbelstangenabschnitt 2, 3 vorgesehen ist. Die Kurbelstangenabschnitte 2, 3 sind dabei jeweils als Vierkantstäbe ausgeführt und die Aufnahmen entsprechend, so dass das vom Bediener aufgebrachte Drehmoment im Formschluss vom Kurbelstangenabschnitt 3 über die Kunststoffbüchse 4 auf den Kurbelstangenabschnitt 2 übertragen wird.

Durch die Beabstandung der beiden hoch wärmeleitfähigen Kurbelstangenabschnitte 2,3 ergibt sich eine Unterbrechung des über Konduktion in der Kurbelstange erfolgenden Wärmeaustausches. Als zusätzliche Sicherung der Berührungsfreiheit der beiden Kurbelstangenabschnitte 2,3 ist ferner eine Trennwand 18 vorgesehen, die sicherstellt, dass sich die beiden Kurbelstangenabschnitte 2,3 auch bei Axialverschiebung nicht berühren können. Die Kunststoffbüchse 4 ist dabei von einer Außenringanordnung 6,7 umfangsseitig umfasst, welche aus zwei im Stumpfstoß aneinander anliegenden Außenringen 6, 7 besteht. Die beiden Außenringe 6,7 können dabei miteinander verstiftet sein und liegen beispielsweise an der Isolierung 9 des in Figur 1 dargestellten Rollladens außenumfangsseitig abdichtend an.

Dies kann beispielsweise dadurch bewerkstelligt werden, dass sie in die Durchgangsöffnung eingepresst worden sind oder in diese eingeklebt oder mit Verfugungsmasse eingefugt bzw. eingeschäumt worden sind. Konvektiver Luftaustausch zwischen den beiden Seiten der Kältesperre 10 ist somit nur noch in einem schmalen Luftspalt 17 möglich, der zwischen der drehbaren Kunststoffbüchsenanordnung 4 und der Außenringanordnung 6,7 vorgesehen ist, um somit ein berührungsfreies und damit reibungsfreies Betätigen der Kurbelstange 2,3 zu ermöglichen. Um den Luftdurchtritt weiter zu verringern, weisen die beiden Außenschalen 6,7 an ihren jeweiligen Axialaußenenden eine Innenschulter 22 auf, der eine entsprechende Durchmesserrücknahme 21 an der Kunststoffbüchsenanordnung 4 zugeordnet ist, so dass sich eine rudimentäre Labyrinthdichtung ergibt.

In einer Weiterbildung gemäß Figur 4, die einen der mit IV in Figur 3 bezeichneten Einzelheit entsprechenden Abschnitt der Kältesperre zeigt, ist die Innenschulter denn auch hinterschnitten, wobei ein Vorsprung an der Durchmessrrücknahme in die Hinterschneidung hervortritt, so dass sich eine verbesserte Labyrinthdichtung 23 ergibt und damit eine weitere Verringerung des möglichen Luftzugs durch den Luftspalt 17.

In einer weiteren Ausgestaltung nach Figur 5 ist der Luftspalt 17 dagegen mit Wellendichtringen 123 zwischen der dortigen Kunststoffbüchsenanordnung 104,105 und der Außenringanordnung 106 abgedichtet, wobei in der dort dargestellten Ausführungsform eine geteilte Kunststoffbüchsenanordnung 104, 105 vorgesehen ist, welche aus den beiden U-förmigen Kunststoffbüchsen 104, 105 besteht, die an ihren Böden 118a, 118b über Stifte 119a, 119b miteinander verstiftet sind.

Die Kältesperre gemäß der in Figur 5 dargestellten Ausführungsform weist dabei eine einteilige Außenringanordnung 106 auf, wobei die beiden die Kunststoffbüchsenanordnung 104, 105 bildenden Kunststoffbüchsen 104, 105 jeweils einen nach außen vorspringenden, umlaufenden Kragenflansch 121 aufweisen, so dass sich zusätzlich zu den Wellendichtringen 123 eine rudimentäre Labyrinthdichtung ergibt.

Eine weitere Ausführungsform der erfindungsgemäßen Kältesperre ist in Figur 6 gezeigt, wobei die Außenringanordnung 206, 207 aus zwei aufeinander liegenden, halbzylinderförmigen Außenschalenelementen 206, 207 ausgebildet ist. Die in Figur 6 dargestellte Kältesperre kann dabei beispielsweise eine einteilige Kunststoffbüchsenanordnung gemäß Figur 3 aufweisen.

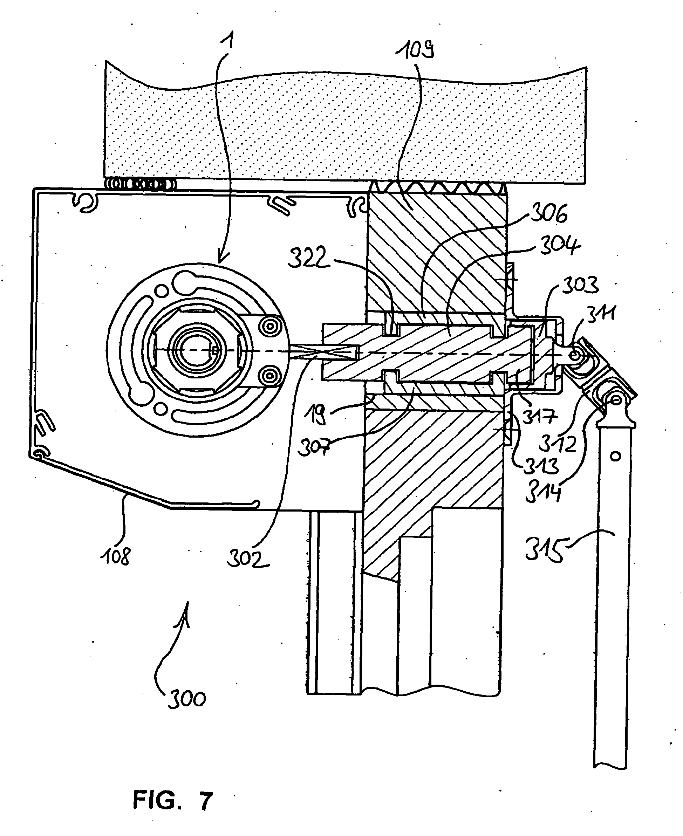

Noch eine weitere Ausführungsform der erfindungsgemäßen Kältesperre ist in Figur 7 gezeigt, wobei der in Figur 7 dargestellte Rollladen 300 bis auf die Drehmomentübertragungseinrichtung mit der Kältesperre baugleich zu dem schon in Figur 2 dargestellten Rollladen 100 ist. Als Kältesperre ist hier ein Kunststoff-Wellenelement 304 vorgesehen, das im Bereich der Durchtrittsöffnung 19 durch den Fensterrahmen 109 von einer von zwei Außenschalenhälften 306, 307 gebildeten Außenringanordnung 306, 307 umfangsseitig umgeben ist, die im wesentlichen der in Figur 6 dargestellten Anordnung entspricht.

Das Kunststoff-Wellenelement 304 weist dabei auf Seiten der Wickelwelle 1 eine Innenmehrkantaufnahme auf, in der ein Mehrkant-Metallstummel 302 aufgenommen ist, über den die Drehmomentübertragungseinrichtung 302, 304, 303 mit der Wickelwelle in Verbindung steht. Anderenends weist das Kunststoff-Wellenelement 304 einen Außenmehrkantansatz 317 auf, über den ein Kupplungsglied 303 mit einer Innenmehrkantmutter gestülpt ist, über das der gebäudeinnenseitige Antriebsstrang 311, 312, 315 an die Drehmomentübertragungseinrichtung 302, 304, 303 angeschlossen ist.

Selbstverständlich sind Abweichungen von den dargestellten Varianten und andere Merkmalskombinationen als in den dargestellten Varianten möglich.

So wäre es beispielsweise denkbar, dass anstatt eines handbetriebenen antriebsstrangs ein Motor auf der Gebäudeinnenseite der Wand vorgesehen ist, dessen Ausgangswelle mit der Drehmomentübertragungseinrichtung in Verbindung steht.

Die Erfindung verkörpert sich somit in den Merkmalen der nebengeordneten Ansprüche und - gemäss vorteilhafter Weiterbildungen - in den folgenden Merkmalen, die jeweils für sich allein und in jedweder für den Durchschnittsfachmann sinnvollen Kombination mit den Gegenständen der Ansprüche kombinierbar sind:
- Die Betätigungsanordnung hat einen ersten Drehmomentübertragungsabschnitt (302), der als eine Anschlußkupplung an der Wickelwelle (1) ausgebidlet ist, und einen zweiten Drehmomentübertragungsabschnitt (303), der als eine Anschlußkupplung an den Antriebsstrang (311, 312, 314, 315) ausgebildet ist, und eine einen Abstand dazwischen zumindest im wesentlichen überbrückende, aus einem schlecht wärmeleitenden Material, insbesondere Kunststoff oder Keramik bestehende Welle (304) aufweist.
- Der erste Drehmomentübertragungsabschnitt als die Anschlußkupplung an die Wickelwelle oder den Antriebsstrang ausgebildet, und der zweite Drehmomentübertragungsabschnitt als eine Metallstange zum Anschluß an den Antriebsstrang oder die Wickelwelle, die den Abstand zwischen dem Wärmekonduktionssperrglied und dem Antriebsstrang oder der Wickelwelle zumindest im wesentlichen überbrückt, wobei das Wärmekonduktionssperrglied als eine damit verbundenes, aus einem schlecht wärmeleitenden Material, insbesondere Kunststoff oder Keramik bestehendes, den verbleibenden Abstand zwischen dem ersten und dem zweiten Drehmomentübertragungsabschnitt überbrückendes Kopplungswetlenelement ausgebildet ist.
- Die Anschlußkupplung (302) an die Wickelwelle (1) oder den Antriebsstrang auf Seiten der Wärmekonduktionssperrglieds (304) weist einen Mehrkant-Metallstummel (302) auf, der in einer entsprechenden Innenmehrkantaufnahme des Wärmekonduktionssperrglieds (304) formschlüssig aufgenommen ist.
- Die Anschlußkupplung (303) an die Wickelwelle oder den Antriebstrang (311, 312, 314, 315) auf Seiten des Wärmekonduktionssperrglieds (304) weist eine Mehrkant-Metallmutter (303) auf, die einen entsprechenden Außenmehrkantansatz (317) des Wärmekonduktionssperrglieds (304) formschlüssig aufnimmt.
- Die beiden Kurbelstangenabschnitte (2, 3) weisen einen Mehrkantquerschnitt auf und die Büchsenanordnung (4; 104, 105) einen dazu passenden Innenquerschnitt.
- Die Büchsenanordnung (4; 104, 105) hat durch eine Trennwand (18; 118a, 118b) voneinander getrennte Aufnahmen für die niedertemperaturseitige Metallstange (2) und die hochtemperaturseitige Metallstange (3).
- Die Büchsenanordnung (104, 105) weist zwei separate, im Querschnitt U-förmige Kunststoffbüchsen (104, 105) auf, deren miteinander verbundene Böden die Trennwand (118a, 118b) bilden.
- Das Wärmekonduktionssperrglied (4; 104, 105; 304) ist durch einen Spalt (17) beabstandet in der Außenringanordnung (6, 7; 107; 206, 207) aufgenommen.
- Das Wärmekonduktionssperrglied (4) weist axialendseitig eine Durchmesserrücknehmung (21) auf und die Außenringanordnung (6, 7) eine entsprechende Innenschulter (22) bzw. das Wärmekonduktionssperrglied (104; 105) axialendseitig eine die Außenringanordnung (106) umgreifende Außenschulter (121).
- Das Wärmekonduktionssperrglied (304) weist an zumindest einem der axialen Enden des von der Außenringanordnung (306, 307) umschlossenen Bereichs einen umlaufenden Einstich auf und die Außenringanordnung (306, 307) eine entsprechende Innenschulter (322) bzw. das Wärmekonduktionssperrglied an zumindest einem der axialen Enden des von der Außenringanordnung umschlossenen Bereichs einen in eine Rücknehmung der Außenringanordnung vorspringenden Umfangsrand.
- Das Wärmekonduktionssperrglied ist mit einer Labyrinth-Dichtung (23) gegen die Außenringanordnung abgedichtet, vorzugsweise axialendseitig.
- Das Wärmekonduktionssperrglied (104, 105) ist mit zumindest einem Wellendichtring (123) gegen die Außenringanordnung (106) abgedichtet, vorzugsweise axialendseitig.
- Die Außenringanordnung (6, 7) wird von zumindest zwei separaten, stumpf aneinander anliegenden Außenringen (6, 7) gebildet.
- Die Außenringanordnung (206, 207) wird von zumindest zwei separaten, aufeinander liegenden Außenschalen (206, 207) gebildet.
- Die Außenringe bzw. Außenschalen sind miteinander verstiftet.
- Die Außenringe bzw. Außenschalen sind miteinander verschraubt.
- Die Außenringanordnung ist in die Durchgangsöffnung des Rollladens eingepresst.
- Die Außenringanordnung ist in die Durchgangsöffnung des Rollladens eingeklebt.
- Die Außenringanordnung ist in die Durchgangsöffnung des Rollladens eingeschraubt.
- Die Außenringanordnung ist in die Durchgangsöffnung des Rollladens eingeschäumt.

## Patentansprüche

1. Rollladen (100; 200; 300) mit einem Rollladenkasten (8; 108), in dem eine Wickelwelle (1) gelagert ist, auf der ein über die Wickelwelle (1) vor einer Gebäudeöffnung auf und ab verfahrbarer Behang aufgenommen ist, wobei die Wickelwelle (1) und der Behang auf einer Seite einer Wand (9; 109) mit niederer Temperatur anbringbar sind, mit einem Antriebsstrang (11, 12; 112, 114, 115; 311, 312, 314, 315) auf einer Seite der Wand (9; 109) mit höherer Temperatur, und mit einer Betätigungsanordnung zum Anschluss des Antriebsstrangs (11, 12; 112, 114, 115; 311, 312, 314, 315) zur Drehbetätigung der Wickelwelle (1), wobei die Betätigungsanordnung eine Drehmomentübertragungsvorrichtung (2, 3, 4; 302, 303, 304, 306, 307) zum drehmomentübertragenden Verbinden des Antriebsstrangs (11, 12; 112, 114, 115; 311, 312, 314, 315) mit der Wickelwelle (1) aufweist, welche zur Durchführung durch eine Öffnung in der die Seite höherer Temperatur von der Seite niederer Temperatur trennenden Wand (9; 109) geeignet ist,
**dadurch gekennzeichnet, dass**
die Drehmomentübertragungsvorrichtung (2, 3, 4; 302, 303, 304, 306, 307) zumindest ein Wärmekonduktionssperrglied (4; 104, 105; 304) zum thermischen Trennen der Seite höherer Temperatur und der Seite niederer Temperatur umfasst, wobei sich das Wärmekonduktionssperrglied zwischen einem ersten Drehmomentübertragungsabschnitt(2;302) der Drehmomentübertragungsvorrichtung und einem zweiten Drehmomentübertragungsabschnitt(3;303) befindet und wobei die Drehmomentübertragungsvorrichtung (2, 3, 4; 302, 303, 304, 306, 307) im Bereich des Wärmekonduktionssperrglieds (4; 104, 105; 304) durch die Öffnung in der die Seite höherer Temperatur von der Seite niederer Temperatur trennenden Wand (9; 109) drehbar hindurchgeführt ist, so dass sich der erste Drehmomentübertragungsabschnitt (2; 302) mit der Wickelwelle (1) drehantriebsverbunden im Kasteninneren erstreckt und der von außen betätigbarer zweite Drehmomentübertragungsabschnitt (3; 303) vom Wärmekonduktionssperrglied zum Antriebsstrang hin.

2. Rollladen nach Anspruch 1, **dadurch gekennzeichnet, dass** die Drehmomentübertragungsvorrichtung eine zumindest im wesentlichen aus einem schlecht wärmeleitenden Material, insbesondere aus Kunststoff oder Keramik bestehende Welle ist, über die die Wickelwelle drehmomentübertragend aber thermisch getrennt mit dem Antriebsstrang verbindbar ist.

3. Rollladen nach Anspruch 1, **dadurch gekennzeichnet, dass** die Drehmomentübertragungsvorrichtung eine Welle mit zumindest einer längserstreckten Metallseele aufweist, welche mit einem schlecht wärmeleitenden Material, insbesondere Kunststoff oder Keramik insbesondere an den Axialendseiten ummantelt ist, vorzugsweise zumindest zwei in Axialrichtung mit Abstand aufeinander folgende Metallseelen.

4. Rollladen (100; 200; 300) nach Anspruch 1, **dadurch gekennzeichnet, dass** die Drehmomentübertragungsvorrichtung (2, 3, 4; 302, 303, 304, 306, 307) durch das Wärmekonduktionssperrglied (4; 104, 105; 304) voneinander thermisch getrennte und miteinander drehmomentübertragend verbundene, metallische Drehmomentübertragungsabschnitte (2, 3; 302, 303) aufweist.

5. Rollladen (100; 200; 300) nach Anspruch 4, **dadurch gekennzeichnet, dass** der erste Drehmomentübertragungsabschnitt (2) und der zweite Drehmomentübertragungsabschnitt (3) jeweils als eine an das Wärmekonduktionssperrglied anschließende Metallstange (2, 3) zum Anschluß an den Antriebsstrang und die Wickelwelle ausgebildet sind, die zusammen den Abstand zwischen Wickelwelle und Antriebsstrang zumindest im wesentlichen überbrücken.

6. Rollladen (100; 200; 300) nach Anspruch 5, **dadurch gekennzeichnet, dass** das Wärmekonduktionssperrglied (4; 104, 105) eine Büchsenanordnung (4; 104, 105) aus einem schlecht wämeleitenden Material aufweist, insbesondere aus Kunststoff oder Keramik, in der die beiden Metallstangen (2, 3) untereinander berührungsfrei jeweils drehschlüssig aufgenommen sind.

7. Rollladen (100; 200; 300) nach einem der vorhergehenden Ansprüche, **dadurch gekennzeichnet, dass** das Wärmekonduktionssperrglied (4; 104, 105; 304) umfangsseitig von einem Wärmekonvektionssperrglied (6, 7; 106; 206, 207; 306, 307) umschlossen wird.

8. Rollladen (100: 200; 300) nach Anspruch 7, **dadurch gekennzeichnet, dass** das Wärmekonduktionssperrglied (4; 104, 105; 304) drehbar in einer Außenringanordnung (6, 7; 106; 206, 207) zumindest teilweise aufgenommen ist.

9. Rollladen (100; 200; 300) nach einem der vorhergehenden Ansprüche, **dadurch gekennzeichnet, dass** die Drehmomentübertragungsvorrichtung (2, 3, 4; 302, 303, 304, 306, 307) im Bereich des Wärmekonduktionssperrglieds (4; 104, 105; 304) durch die Kastengehäusewand (9) bzw. deren Isolierung (9) oder ein anderes, eine thermische Trennung zwischen dem Kasteninneren und dem Gebäudeinneren bildendes Bauteil (109) durchgeführt ist.

10. Rollladen (100; 200; 300) nach einem der vorhergehenden Ansprüche, **dadurch gekennzeichnet, dass** die Durchführung der Drehmomentübertragungsvorrichtung (2, 3, 4; 302, 303, 304, 306, 307) durch die die Seite niederer Temperatur und die Seite höherer Temperatur trennende Wand (9; 109) gegen Wärmekonvektion abgedichtet ist.

11. Rollladen (100; 200; 300) nach einem der Ansprüche 8 bis 10, **dadurch gekennzeichnet, dass** die Seite niederer Temperatur und die Seite höherer Temperatur trennende Wand (9; 109) eine Durchgangsöffnung (19) aufweist, in der die Außenringanordnung (6, 7; 107; 206, 207) anliegt.

## Claims

1. Roller shutter (100; 200; 300) with a roller shutter box (8; 108) in which a winding shaft (1) is fitted on which a curtain is mounted which can be moved up and down in front of a building opening using the winding shaft (1) wherein the winding shaft (1) and the curtain are installable on a side of a wall (9; 109) which has a lower temperature, with a drive section (11, 12; 112, 114, 115; 311, 312, 314, 315) on a side of the wall (9; 109) with a higher temperature, and with an actuation assembly for connecting the drive section (11, 12; 112, 114, 115; 311, 312, 314, 315) for the rotary actuation of the winding shaft (1), wherein the actuation assembly has a torque transfer device (2, 3, 4; 302, 303, 304, 306, 307) for connecting the drive section (11, 12; 112, 114, 115; 311, 312, 314, 315) such that the torque is transferred to the winding shaft (1) which is suitable for passing through an opening in the wall (9; 109) which separates the side with a higher temperature from the side with a lower temperature
**characterised in that**
the torque transfer device (2, 3, 4; 302, 303, 304, 306, 307) has at least one heat conduction barrier element (4; 104, 105; 304) for the thermal isolation of the side with a higher temperature and the side with a lower temperature, wherein the heat conduction barrier element is located between a first torque transfer section (2; 302) of the torque transfer device and a second torque transfer section (3; 303) and wherein the torque transfer device (2, 3, 4; 302, 303, 304, 306, 307) passes rotatably through the opening in the wall (9; 109) which separates the side with a higher temperature from the side with a lower temperature in the region of the heat conduction barrier element (4; 104, 105; 304), so that the first torque transfer section (2; 302) being connected to the winding shaft (1) in a rotation transmission manner extends inside the box (8; 108) and the second torque transfer section (3; 303) which can be actuated from outside extends from the heat conduction barrier element to the drive section.

2. Roller shutter as described in claim 1 **characterised in that** the torque transfer device essentially consists of a shaft made of a poor heat conducting material, in particular plastic or ceramic, through which the winding shaft can be connected to the drive section such that the torque is transferred but the connection is also thermally isolated.

3. Roller shutter as described in claim 1 **characterised in that** the torque transfer device has a shaft with at least one longitudinal metal core which is sheathed in a poor heat conducting material, in particular plastic or ceramic, in particular at the axial ends, ideally at least two metal cores in the axial direction with a gap between them.

4. Roller shutter (100; 200; 300) as described in claim 1 **characterised in that** the torque transfer device (2, 3, 4; 302, 303, 304, 306, 307) has metallic torque transfer sections (2, 3, 302, 303) which are separated from each other by the heat conduction barrier element (4; 104, 105; 304) and are thermally isolated and interconnected to transfer the torque.

5. Roller shutter (100; 200; 300) as described in claim 4 **characterised in that** the first torque transfer section (2) and the second torque transfer section (3) each take the form of a metal rod (2, 3) connected to the heat conduction barrier element for connection to the drive section and the winding shaft, which together at least essentially bridge the gap between the winding shaft and drive section.

6. Roller shutter (100; 200; 300) as described in claim 5 **characterised in that** the heat conduction barrier element (4, 104, 105) features a bushing assembly (4, 104, 105) made of a poor heat conducting material, in particular plastic or ceramic, in which the two metal rods (2, 3) are mounted with no contact to each other but with a positive rotary lock.

7. Roller shutter (100; 200; 300) as described in one of the previous claims **characterised in that** the circumference of the heat conduction barrier element (4; 104, 105; 304) is encased by a heat convection barrier element (6, 7, 106, 206, 207, 306, 307).

8. Roller shutter (100; 200; 300) as described in claim 7 **characterised in that** the heat conduction barrier element (4; 104, 105; 304) is at least partly rotary-mounted in an external ring assembly (6, 7, 106, 206, 207).

9. Roller shutter (100; 200; 300) as described in one of the previous claims **characterised in that** in the vicinity of the heat conduction barrier element (4; 104, 105; 304) the torque transfer device (2, 3, 4; 302, 303, 304, 306, 307) passes through the box housing wall (9) or its insulation (9) or another component (109) which forms a thermal barrier between the interior of the box and the interior of the building.

10. Roller shutter (100; 200; 300) as described in one of the previous claims **characterised in that** the passageway for the torque transfer device (2, 3, 4; 302, 303, 304, 306, 307) is sealed against heat convection through the wall (9; 109) which separates the side at a lower temperature and the side at a higher temperature.

11. Roller shutter (100; 200; 300) as described in one of the claims 8 to 10 **characterised in that** the wall (9; 109) which separates the side at a lower temperature and the side at a higher temperature features a passageway opening (19) with which the external ring assembly (6, 7, 106, 206, 207) is in contact.

## Revendications

1. Volet roulant (100 ; 200 ; 300) avec un coffre de volet roulant (8 ; 108) dans lequel est logé un arbre d'enroulement (1) sur lequel est reçu un tablier apte à être descendu et monté via ledit arbre d'enroulement (1) devant une ouverture de bâtiment, ledit arbre d'enroulement (1) et ledit tablier pouvant être montés sur un côté à faible température d'une paroi (9 ; 109), avec un groupe d'entraînement (11, 12 ; 112, 114, 115 ; 311, 312, 314, 315) situé sur un côté à température plus élevée de la paroi (9 ; 109), et avec un ensemble de commande pour raccorder ledit groupe d'entraînement (11, 12 ; 112, 114, 115 ; 311, 312, 314, 315) pour l'actionnement en rotation de l'arbre d'enroulement (1), ledit ensemble de commande présentant un dispositif de transmission de couple (2, 3, 4 ; 302, 303, 304, 306, 307) destiné à relier ledit groupe d'entraînement (11, 12 ; 112, 114, 115 ; 311, 312, 314, 315) et ledit arbre d'enroulement (1) entre eux de manière à ce qu'un couple soit transmis et pouvant passer à travers une ouverture ménagée dans ladite paroi (9 ; 109) séparant le côté à température plus élevée et le côté à faible température,
**caractérisé par le fait que**
ledit dispositif de transmission de couple (2, 3, 4 ; 302, 303, 304, 306, 307) comprend au moins un élément barrière de conduction thermique (4 ; 104, 105 ; 304) pour séparer thermiquement le côté à température plus élevée et le côté à faible température, ledit élément barrière de conduction thermique étant situé entre une première section de transmission de couple (2 ; 302) du dispositif de transmission de couple et une seconde section de transmission de couple (3 ; 303) et ledit dispositif de transmission de couple (2, 3, 4 ; 302, 303, 304, 306, 307) passant de manière à pouvoir tourner, au niveau de l'élément barrière de conduction thermique (4 ; 104, 105 ; 304), à travers l'ouverture ménagée dans ladite paroi (9 ; 109) séparant le côté à température plus élevée et le côté à faible température, de sorte que ladite première section de transmission de couple (2 ; 302), reliée à l'arbre d'enroulement (1) avec transmission de couple, s'étend à l'intérieur du coffre et que ladite seconde section de transmission de couple (3 ; 303) actionnable de l'extérieur s'étend depuis l'élément barrière de conduction thermique vers le groupe d'entraînement.

2. Volet roulant selon la revendication 1, **caractérisé par le fait que** le dispositif de transmission de couple est un arbre qui est fait, au moins pour l'essentiel, d'une matière qui est mauvais conducteur de chaleur, en particulier de matière plastique ou de céramique, et par l'intermédiaire duquel ledit arbre d'enroulement peut être relié avec transmission de couple, mais d'une manière thermiquement séparée, au groupe d'entraînement.

3. Volet roulant selon la revendication 1, **caractérisé par le fait que** ledit dispositif de transmission de couple présente un arbre ayant au moins une âme métallique s'étendant longitudinalement qui est enrobée d'une matière qui est mauvais conducteur de chaleur, en particulier de matière plastique ou de céramique, en particulier aux extrémités axiales, de préférence au moins deux âmes métalliques se succédant à distance l'une de l'autre dans la direction axiale.

4. Volet roulant (100 ; 200 ; 300) selon la revendication 1, **caractérisé par le fait que** ledit dispositif de transmission de couple (2, 3, 4 ; 302, 303, 304, 306, 307) comprend des sections métalliques de transmission de couple (2, 3 ; 302, 303) qui sont séparées thermiquement l'une de l'autre par ledit élément barrière de conduction thermique (4 ; 104, 105 ; 304) et reliées entre elles avec transmission de couple.

5. Volet roulant (100 ; 200 ; 300) selon la revendication 4, **caractérisé par le fait que** la première section de transmission de couple (2) et la seconde section de transmission de couple (3) sont réalisées chacune sous forme d'une barre métallique (2, 3) rejoignant l'élément barrière de conduction thermique et destinée à être raccordée au groupe d'entraînement et à l'arbre d'enroulement et qui, ensemble, pontent au moins pour l'essentiel la distance séparant l'arbre d'enroulement et le groupe d'entraînement.

6. Volet roulant (100 ; 200 ; 300) selon la revendication 5, **caractérisé par le fait que** ledit élément barrière de conduction thermique (4 ; 104, 105) présente un ensemble de douille (4 ; 104, 105) en une matière qui est mauvais conducteur de chaleur, en particulier en matière plastique ou en céramique, dans lequel les deux barres métalliques (2, 3) sont reçues sans contact entre elles respectivement à engagement positif en rotation.

7. Volet roulant (100 ; 200 ; 300) selon l'une quelconque des revendications précédentes, **caractérisé parle fait que** ledit élément barrière de conduction thermique (4 ; 104, 105 ; 304) est entouré sur la périphérie d'un élément barrière de convection thermique (6, 7 ; 106 ; 206, 207 ; 306, 307).

8. Volet roulant (100 ; 200 ; 300) selon la revendication 7, **caractérisé par le fait que** ledit élément barrière de conduction thermique (4 ; 104, 105 ; 304) est reçu, au moins en partie, dans un ensemble d'anneau extérieur (6, 7 ; 106 ; 206, 207) de manière à pouvoir tourner.

9. Volet roulant (100 ; 200 ; 300) selon l'une quelconque des revendications précédentes, **caractérisé par le fait que** le dispositif de transmission de couple (2, 3, 4 ; 302, 303, 304, 306, 307) passe, au niveau de l'élément barrière de conduction thermique (4 ; 104, 105 ; 304), à travers la paroi (9) du carter du coffre ou bien à travers l'isolation (9) de celle-ci ou un autre composant (109) formant une séparation thermique entre l'intérieur du coffre et l'intérieur du bâtiment.

10. Volet roulant (100 ; 200 ; 300) selon l'une quelconque des revendications précédentes, **caractérisé par le fait que** le passage du dispositif de transmission de couple (2, 3, 4 ; 302, 303, 304, 306, 307) est rendu étanche à la convection thermique par la paroi (9 ; 109) séparant le côté à faible température et le côté à température plus élevée.

11. Volet roulant (100 ; 200 ; 300) selon l'une quelconque des revendications 8 à 10, **caractérisé par le fait que** la paroi (9 ; 109) séparant le côté à faible température et le côté à température plus élevée présente une ouverture de passage (19) dans laquelle s'appuie ledit ensemble d'anneau extérieur (6, 7 ; 107 ; 206, 207).
